# EUROPEAN PATENT APPLICATION

(11) **EP 4 764 914 A1**
(43) Date of publication of application: **24.06.2026**
(21) Application number: 24222832.8
(22) Date of filing: 23.12.2024
(51) Int. Cl.: G06F 21/44, G06F 9/455, H04L 9/14, H04L 9/32

(54) **DIGITAL SIGNATURES FOR APPLICATIONS WITHIN VIRTUAL MACHINES**

(71) Applicant: Barclays Execution Services Limited, London E14 5HP (GB)
(72) Inventor: EDGE, Jamie, London, E14 5HP (GB)
(74) Representative: Carpmaels & Ransford LLP

(57) **Abstract**

A method of securely providing a digital signature for an application within a virtual machine, the method comprising: authenticating, at a code sign server, a physical machine on which the virtual machine is hosted; generating, by the code sign server, a setup token in response to authenticating the physical machine, and storing data relating to the setup token at the code sign server; initiating, within the virtual machine, a code sign client using the setup token; receiving, at the code sign server from the code sign client, the setup token; authenticating, at the code sign server, the code sign client using the setup token received from the code sign client and the data relating to the setup token stored at the code sign server; storing a server security credential at the code sign server and a client security credential accessible to the code sign client in response to authenticating the code sign client; sending, from the code sign client to the code sign server, a server request for a digital signature for the application within the virtual machine using the client security credential; sending, from the code sign server to an external code sign service, an external request for the digital signature in response to authenticating the server request using the server security credential; receiving, at the code sign server from the external code sign service, the digital signature in response to the external request; sending, from the code sign server to the code sign client, the digital signature; and binding, within the virtual machine, the digital signature to the application.

## Description

### Technical Field

This disclosure relates to code signing applications. More particularly, this disclosure relates to methods of, and systems for, securely providing a digital signature for an application within a virtual machine.

### Background

Code signing is a process of using digital signatures to sign software (e.g., end user applications) to validate the identity of the author of the software and guarantee that the software has not been altered with since it was signed. This provides users of the software with a verification of the integrity and authenticity of the software. For example, in the context of the Apple^{®} platform, a developer of an end user application (e.g., iPhone application) will use code signing prior to publishing the application for download and distribution, for example, at the point of compiling and/or publishing the application to an application store or library. In this context, the developer will obtain a digital signature for the application from Apple, which an end user and/or an end user device running on, e.g., iOS can review to determine the application has indeed been published by the named author (i.e., the developer) as opposed to a malicious third party seeking to exfiltrate sensitive data belonging to the end user and/or compromise the end user device on which the application may be downloaded. The digital signature also verifies for the end user that the application has not been tampered with since it was published for download. This process, of course, applies equally to other types of applications and other suitable platforms and devices.

From the perspective of an application developer, the general process of code signing an application involves building the application (i.e., by writing the code for the application), applying for a code signing certificate from a trusted certificate authority, encrypting the application (e.g., its code) with a security credential provided with a code signing certificate received from the trusted certificate authority, and then applying a digital signature including, amongst other components, the encrypted application code and the code signing certificate, to the application, e.g., by appending it to the code of the application. At this point, the application is ready to be distributed to, and/or published for download by, end user devices.

Given that end user applications provide an opportune vehicle for accessing sensitive data from, and/or compromising the security of, end user devices, the process of developing and distributing software applications (i.e., for download) is a common target of cyberattacks from malicious parties. Therefore, in light of the ever-increasing reliance on end user applications, e.g., smartphone applications, for performing everyday tasks, effective and secure code signing has become incredibly important in order to protect against the security risks that may be faced during application development and distribution.

A way to improve the security of code signing and, more generally, software trust management, is to outsource part of the software security functions associated with an application and/or a build environment of an application to third-party software security tools, such as DigiCert^{®} Software Trust Manager. Such tools may support and supplement DevOps (development and operations) pipelines, e.g., via integration with CI/CD (continuous integration/continuous deployment) platforms, by managing code signing and other software trust management security functions in a centralised manner. Using such platforms, which involve the use of secure HSMs (hardware signing modules) for storing data required for code signing, can overcome some of the security risk issues associated with managing code signing on developer-side build environments, which as discussed, can be a target of malicious cyberattacks. That said, although some of the software security functions associated with an application, e.g., code signing, may be processed, in part, at a secure location external to a build environment of the application, i.e., on servers associated with the third-party software security tools, this does not mitigate all of the security risks associated with code signing applications since the use of long-lived developer-side build environments (e.g., servers where applications are developed), which store data over a long-term, may still be prone to malicious cyberattacks and can, therefore, also be problematic from a security perspective.

The use of ephemeral build environments, e.g.., those involving one or more virtual machines for use in the building of applications, can help circumvent issues associated with traditional long-lived environments since, principally, ephemeral build environments are not used to store sensitive data in the long-term and can be regularly replaced by new and, therefore, non-associated ephemeral environments. However, a problem arises in that the authentication and authorisation models associated with third-party software security and code signing tools, e.g., DigiCert^{®} Software Trust Manager, are configured for use with long-lived environments. There is, therefore, a need for a solution to mitigate the security risks of code signing applications in ephemeral build environments and, more particularly, for a secure mechanism to provide ephemeral virtual machines access to signing certificates.

It is thus an object of the invention to address existing security issues with code signing applications, particularly those applications developed, in part, using virtual machines.

### Summary

The present invention is defined by the independent claims, with further optional features being defined by the dependent claims.

In a first aspect of the invention, there is provided a method of securely providing a digital signature for an application within a virtual machine, the method comprising:
a) authenticating, at a code sign server, a physical machine on which the virtual machine is hosted;
b) generating, by the code sign server, a setup token in response to authenticating the physical machine, and storing data relating to the setup token at the code sign server;
c) initiating, within the virtual machine, a code sign client using the setup token;
d) receiving, at the code sign server from the code sign client, the setup token;
e) authenticating, at the code sign server, the code sign client using the setup token received from the code sign client and the data relating to the setup token stored at the code sign server;
f) storing a server security credential at the code sign server and a client security credential accessible to the code sign client in response to authenticating the code sign client;
g) sending, from the code sign client to the code sign server, a server request for a digital signature for the application within the virtual machine using the client security credential;
h) sending, from the code sign server to an external code sign service, an external request for the digital signature in response to authenticating the server request using the server security credential;
i) receiving, at the code sign server from the external code sign service, the digital signature in response to the external request;
j) sending, from the code sign server to the code sign client, the digital signature; and
k) binding, within the virtual machine, the digital signature to the application.

By implementing and utilising a code sign server in combination with a code sign client in accordance with the above steps and context, the method provides a secure and adaptable means for code signing applications, particularly those built and/or compiled in ephemeral build environments. Specifically, the code sign server provides a secure intermediary between the virtual machine, and an external, e.g., third-party, code signing service. As a result, the code sign server is capable of not being bound permanently to any specific environments, nor is required to store permanently sensitive data for use, therewith. Similarly, the code sign client that is initiated within the virtual machine is, by virtue of the intrinsic properties of a virtual machine, neither necessarily configured for permanence nor required to store sensitive or identifying data outside of the single execution of the method. This lack of association between the code sign server and a single specific build environment (and the code sign client initiated on a virtual machine, thereon), in terms of location and in most cases permanence, outside of the execution of the method is what enables the invention to provide a secure and adaptable means for code signing applications. In addition, the code sign client, again by virtue of the intrinsic properties of a virtual machine, is unique for every instance of a virtual machine and is initiated according to a setup token that is generated by the code sign server, which is what permits the crucial relationship, therebetween, to be established. Indeed, in conventional implementations, long-lived build environments are a target for malicious cyberattacks - the use of a virtual machine for code signing and processing data related to the code signing process, therefore, allows for improved robustness against cyberattacks due to their relative non-permanence, isolation, and ease of replacement. It should also be noted that the virtual machine need not represent the environment in which the application is developed and/or compiled - indeed the virtual machine may just be used for the code signing of a developed application.

By authenticating, at the code sign server, the physical machine on which the virtual machine is hosted, an additional safeguard against security risks is provided. This is because by the code sign server authenticating the physical machine, only those physical machines or, e.g., the parties utilising the physical machines, permitted for engagement with the code sign server are authenticated and allowed to access the functions of the code sign server, thereafter.

By generating, by the code sign server, the setup token in response to authenticating the physical machine, and storing data relating to the setup token at the code sign server the code sign server is able to instantiate a new code signing process, e.g., based on data obtained via the physical machine for the given code signing process, such as details regarding a particular application build to which the subsequent code signing relates. This ensures that each process of code signing is initialised upon a unique basis, thus providing robustness against malicious re-use of secure data.

By initiating, within the virtual machine, the code sign client using the setup token, the method ensures that the component of the virtual machine most critical for the code signing process, i.e., the code sign client, is initiated with a token capable of binding the code sign client with the particular code signing process instantiated at the code sign server, and which enables non-permanently direct communication between the initiated code signing component, i.e., the code sign client, and the secure intermediary that is the code sign server. This further reduces the security risk of code signing by reducing involvement in the code signing process of components within the physical machine but outside the virtual machine.

By receiving, at the code sign server from the code sign client, the setup token; and authenticating, at the code sign server, the code sign client using the setup token received from the code sign client and the data relating to the setup token stored at the code sign server, the code sign server is able to recognise that it is indeed the specific virtual machine (and the specific code sign client) provisioned for the specific code signing process that it has received data from, which allows the code sign server to establish a trusted communication link with the specific code sign client for the duration of the code signing process.

By storing the server security credential at the code sign server and the client security credential accessible to the code sign client in response to authenticating the code sign client, an authentication protocol is established between the code sign server and the code sign client, thereby ensuring that any code signing process that is engaged, therebetween, is secure, and preventing intervention in the code signing process from malicious non-authorised and non-authenticated sources.

By sending, from the code sign client to the code sign server, the server request for a digital signature for the application within the virtual machine using the client security credential; and sending, from the code sign server to the external code sign service, the external request for the digital signature in response to authenticating the server request using the server security credential, a code signing process specific to the virtual machine and the code sign client is initiated after authenticating the request received by the code sign server from the code sign client using the client security credential. This mechanism ensures that only a code signing request from the authorised code sign client is enacted on by the code sign server. As discussed, the code sign server provides an intermediary between the code sign client provisioned within the virtual machine specifically for the code signing process and the external code signing service. Such external code signing services are configured principally for communication with long-lived environments - the code sign server, which may be known to the external code signing service, provides a pathway for code signing that is not tied to the ephemeral environment in a way that it can be identified by sources of malicious cyberattacks. As such, the external request represents an engagement between the code sign server and the external code signing service that is permitted and that overcomes the challenges with ephemeral environments being unable to engage directly with the external code sign service. An external code sign service represents a software or platform that may, e.g., be provisioned on the cloud, that is able to engage with trusted certificate authorities and manage the generation of a digital signature on behalf of a code signing identity, i.e., an application developer, using secure infrastructure that is non-local to, and isolated from, the build environments associated with the code signing identity.

Finally, by receiving, at the code sign server from the external code sign service, the digital signature in response to the external request; sending, from the code sign server to the code sign client, the digital signature; and binding, within the virtual machine, the digital signature to the application, the method is able to securely provide the digital signature for the application within the virtual machine. As a result, virtual machines may be used to overcome security risks with applying digital signatures to applications in long-lived environments.

In some embodiments, the client security credential is a signing token, and the server security credential is a hashed version of the signing token.

In some embodiments, the method further comprises generating, by the code sign server, the signing token in response to authenticating the code sign client; and hashing, by the code sign server, the signing token.

In some embodiment, the method further comprises sending, by the code sign server, the signing token to the code sign client; and storing, by the code sign client, the signing token in an encrypted repository.

In some embodiments, sending, from the code sign client to the code sign server, a server request for a digital signature for the application within the virtual machine using the client security credential comprises sending the signing token.

In some embodiments, sending, by the code sign server to an external code sign service, an external request for the digital signature in response to authenticating the server request using the server security credential comprises comparing the hashed signing token to the signing token received from the code sign client.

One mechanism of ensuring that a request, from the code sign client to the code sign server, for the digital signature for the application is authorised involves the use of tokenisation. To enable the code signing process to be enacted, this mechanism requires that the signing token from the code sign client is compared to the hashed version of the signing token, e.g., to determine whether they correspond and, if so, allowing the external request for the digital signature to be transmitted to the external code sign service. Thus, for the request to be valid, the code sign client that has been authenticated must be in possession of the signing token and must transmit this directly to the code sign server. Should a malicious party be able to obtain the signing token, they will neither be able to exploit the token for sensitive data, as tokens have no intrinsic meaning, nor will they be able to make a valid signature request with it since any such request will not be transmitted from the authenticated and sole authorised component that is the code sign client.

In some embodiments, the client security credential is a private key of an asymmetric key pair and the server security credential is a public key of the asymmetric key pair.

In some embodiments, the method further comprises generating, by the code sign client, the asymmetric key pair in response to authenticating the code sign client; storing, by the code sign client, the private key in an encrypted repository; and sending, from the code sign client to the code sign server, the public key.

In some embodiments, sending, from the code sign client to the code sign server, a server request for a digital signature for the application within the virtual machine using the client security credential comprises digitally signing the server request using the private key.

In some embodiments, sending, by the code sign server to an external code sign service, an external request for the digital signature in response to authenticating the server request using the server security credential comprises retrieving the public key and validating the digitally signed server request using the public key.

Another mechanism of ensuring that a request, from the code sign client to the code sign server, for the digital signature for the application is authorised involves the use of asymmetric encryption. Asymmetric encryption provides an alternative authorisation mechanism to that of tokenisation, which may be suitable depending on the respective capabilities and composition of the code sign server and the code sign client.

In some embodiments, the method further comprises compiling, within the virtual machine, the application.

In some embodiments, the compiling is performed prior to authenticating the physical machine on which the virtual machine is hosted.

In some embodiments, the compiling is performed after storing the server security credential at the code sign server and the client security credential accessible to the code sign client and prior to sending the server request for the digital signature.

The build environment represented by the virtual machine may be used for all, or part, of the application development and publication process. Once an application is compiled, the process of code signing the application can begin. Compiling the application may precede or follow the authentication of the code sign client at the code sign server using the setup token. Similarly, compiling the application may precede or follow the storing of the server security credential at the code sign server and the client security credential accessible to the code sign client. In any case, the process of compiling the application precedes the server request for the digital signature and may be provide as the trigger for said request being sent by the code sign client to the code sign server. The application may be developed, i.e., its code written, in a different environment to that of the virtual machine and may be imported into the virtual machine only when it is ready to be compiled. In such a case, the life of the virtual machine may be limited in duration, thereby reducing its profile and, by extension, the risk of it being cyberattacked.

In some embodiments, the server request comprises a compiled version of the application and a signing algorithm.

In some embodiments, the external request comprises the compiled version of the application and the signing algorithm.

The signing algorithm may be used to sign tokens issued for the application, e.g., by the external code sign service. The signing algorithm may be represented by an asymmetric encryption algorithm involving the use of a private-public key pair and is what allows a trusted certificate authority to issue, via, e.g., the external code sign service, a corresponding certificate for signing the application. The private key corresponding to the certificate is what allows the developer to bind the signature to the application, and the public key is what allows an end user to verify the signature.

In some embodiments, the physical machine is executing a continuous integration/continuous deployment, CI/CD, runner, and the CI/CD runner provisions the virtual machine on the physical machine.

The method may be performed in the context of a DevOps pipeline or environment, e.g., one that is implemented using continuous integration/continuous deployment platform, such as GitLab. A runner runs jobs, i.e., code defined using the platform, to perform tasks in a CI/CD pipeline. An application developer may interact initially with a CI/CD runner of a CI/CD platform executing on the physical machine to initiate the process of securely providing the digital signature for the application within the virtual machine.

In some embodiments, evaluating, at the code sign server, a certificate presented by the CI/CD runner to determine whether to grant access of the code sign sever to a code sign identity intending to issue a request for the digital signature for the application.

In some embodiments, the method further comprises evaluating, at the code sign server, data relating to the application to determine whether to grant access of the code sign sever to the code sign identity intending to issue a request for the digital signature for the application.

In some embodiments, generating, by the code sign server, the setup token in response to authenticating the physical machine comprises generating the setup token if it is determined that that the code sign server should grant access of the code sign sever to the code sign identity intending to issue the request for the digital signature for the application.

In some embodiments, initiating, within the virtual machine, the code sign client using the setup token comprises provisioning, via the CI/CD runner, the virtual machine on the physical machine; and transmitting, from the code sign server to the code sign client via the CI/CD runner, the setup token.

Much of the method of securely providing the digital signature for the application within the virtual machine involves the code sign server and the code sign client interacting directly with one another. However, the code sign client exists within a virtual machine and, therefore, may be ephemeral by nature. As such, embodiments of the method involve, as part of the steps of authenticating the physical machine, generating the setup token in response and initiating the code sign client, evaluating data received from the application developer, via the CI/CD runner, relating to the identity of the application developer and/or the build details relating to the application being compiled, to determine whether access to the code signing functions of the code sign server should be granted to one or more of the physical machine, the code signing identity, and the application. This process of evaluation provides an additional safeguard against security risks associated with code signing applications by ensuring only authorised hardware, parties and software is provided access to code signing functions via the code sign server. The CI/CD runner may provide initially an intermediary between the code sign server and one or more of the hardware, parties and software involved in the code signing process. If it is determined by the code sign server that access to its functions should be granted to the one or more of the hardware, parties and software involved, the virtual machine may be provisioned on the physical machine using the CI/CD runner.

In some embodiments, the data relating to the setup token comprises data, stored against the setup token, relating to the application and a source IP address of a code sign identity intending to issue a request for the digital signature for the application.

In some embodiments, authenticating, at the code sign server, the code sign client using the setup token received from the code sign client and the data relating to the setup token stored at the code sign server comprises evaluating the setup token received from the code sign client and a source IP address of the setup token received from the code sign client to identify a code sign identity to provide, via the code sign client, access of the security credential to.

Storing, against the setup token, data relating to the application and the source IP address of the code sign identity allows the code sign server to verify that the setup token subsequently received at the code sign server from the code sign client is indeed from an authorised virtual machine, i.e., from the virtual machine provisioned on the physical machine, e.g., via a CI/CS runner, by the developer of the specific application for the purposes of code signing the application.

In some embodiments, the method further comprises invalidating, via the code sign server, the setup token.

Once the code sign client is authenticated at the code sign server using the setup token, the setup token may be invalidated via the code sign server to prevent reuse of the setup token. This ensures that, should the setup token be accessed by an unauthorised party subsequently to authentication of the code sign client, the unauthorised party will not be able to exploit the setup token for use with the code sign server for malicious objectives. Further, invalidating the setup token ensures that each time a further application or batch of applications require one or more digital signatures, and one or more further virtual machines are provisioned, accordingly, the code sign server needs to authenticate the further virtual machines, preventing misuse of the original virtual machine or the setup token associated, therewith.

In some embodiment, sending, from the code sign client to the code sign server, a server request for a digital signature for the application within the virtual machine using the client security credential comprises invoking, using the CI/CD runner, a code sign tool within the virtual machine, and the code sign tool invoking the code sign client to send the server request.

In some embodiments, the client security credential is stored at a secret store within the virtual machine.

In some embodiments, sending, from the code sign client to the code sign server, a server request for a digital signature for the application within the virtual machine using the client security credential comprises the code sign client retrieving the client security credential from the secret store.

In addition to the code sign client, other tools, software and applications may be provisioned on the virtual machine to support the code signing process. For example, the virtual machine may include a code sign tool, which is an application that can facilitate within the virtual machine the process of code signing the application, e.g., by interfacing with the code signing identity and/or performing standard cryptographic functions. In addition, the virtual machine may include a secret store, which can store the client security credential within it. Therefore, when destroying the virtual machine, sensitive data that may be stored on and/or processed by these supporting components is also destroyed. By using these supporting components, the invention may take advantage of existing functions and/or tools that may be facilitated using existing software. This means that less work is required on the part of the application developer to program the code sign client, thus making it easier to provision the code sign client within the virtual machine, which, ultimately, the supports ephemerality and ease of deployment of the virtual machine and, by extension, the code signing process.

In some embodiments, sending, from the code sign server to an external code sign service, an external request for the digital signature in response to authenticating the server request using the server security credential comprises evaluating, at the code sign server, the client security credential against data relating to the application stored against the setup token to determine whether the external request for the digital signature is permitted, and sending the external request if it is determined that the external request is permitted.

The external request may, for example, include an identifier of the code signing identity seeking the digital signature for the application. By evaluating the client credential against data stored by the code sign server, the method provides an additional mechanism for ensuring that the request is permitted, e.g., by checking that the server request has been initiated by a permitted code signing identity.

In some embodiments, the method further comprises invalidating, via the code sign server, the client security credential.

In some embodiments, the method further comprises destroying, via the CI/CD runner, the virtual machine.

A benefit of the method lies in exploiting the robust and dynamic properties of virtual machines, in the case for processing sensitive data and for performing the secure process that is binding the digital signature to the application. The security of the method may be enhanced by ensuring that some of the components provisioned within, or for use with, the physical machine, such as the client security credential and the virtual machine, itself, are invalidated or destroyed. This prevents misuse of said components subsequent to the authorised code signing process.

In some embodiments, the virtual machine is an ephemeral virtual machine. Whilst the maximum security benefits of the methods of the invention are achieved when the virtual machine is an ephemeral virtual machine, the methods of the invention also work with persistent virtual machines.

In a second aspect of the invention, there is provided a system configured to perform the method disclosed herein, the system comprising:
a physical machine comprising a virtual machine provisioned, thereon, the virtual machine comprising a code sign client; and
a code sign server.

### Brief Description of the Drawings

Embodiments of the invention are described below, by way of example, with reference to the following drawings, in which:
Fig. 1 shows a physical machine with a virtual machine provisioned, thereon, according to an embodiment of the invention.
Fig. 2 shows a system for securely providing a digital signature for an application within a virtual machine according to an embodiment of the invention.
Fig. 3 shows a flow diagram of a method of securely providing a digital signature for an application within a virtual machine according to an embodiment of the invention.
Fig. 4 shows a protocol sequence diagram of a method of securely providing a digital signature for an application within a virtual machine according to an embodiment of the invention.

### Detailed Description

In the description and figures that follow, certain exemplary embodiments of the disclosure are described. As discussed, the present disclosure pertains to methods of, and systems for, securely providing a digital signature for an application within a virtual machine.

A digital signature is an electronic, encrypted, stamp of authentication on digital information, e.g., an application, that confirms that the information originated from the signer and has not been altered since being signed. A digital signature provides the highest level of identity assurance when dealing with digital information. A digital signature is backed by a digital certificate, which is issued typically by a Trusted Certificate Authority, and which provides, for example, the public key that can be used to validate the private key that is associated with a digital signature.

For the purposes of the present disclosure, the application is not limited to being configured for a particular platform or operating system. Indeed, the methods and systems disclosed herein have applicability for any type of application that may require a digital signature.

A virtual machine is a compute resource that uses software instead of a physical computer to run programs, deploy applications, and so on. Virtual machines are based on computer architectures and provide the functionality of a physical computer. Their implementations may involve specialised hardware, software, or a combination of the two. One or more virtual "guest" machines run on a physical "host" machine. Each virtual machine runs its own operating system and functions separately from other virtual machines, even when they are all running on the same host. Virtual machine technology is used for many use cases across on-premises, i.e., local, and cloud environments. Virtual machines may be deployed to accommodate different levels of processing power needs, to run software that requires a different operating system, or to test applications in a safe, sandboxed environment.

Virtual machines have a number of advantages, including portability, reliability, isolation from the physical host machine, i.e., security. One type of virtual machine is an ephemeral virtual machine, which is, in effect, a temporary virtual machine that when terminated loses all local data, configuration changes, packages and so on. The properties of ephemeral virtual machines, such as reproducibility, independence and scalability, make them advantageous for performing specific isolated, independent and secure activities.

More generally, an ephemeral environment is a short-lived, isolated deployment of an application, project, feature and so on. Ephemeral environments provide robust, on-demand platforms for running tests, previewing features, executing isolated operations and so on.

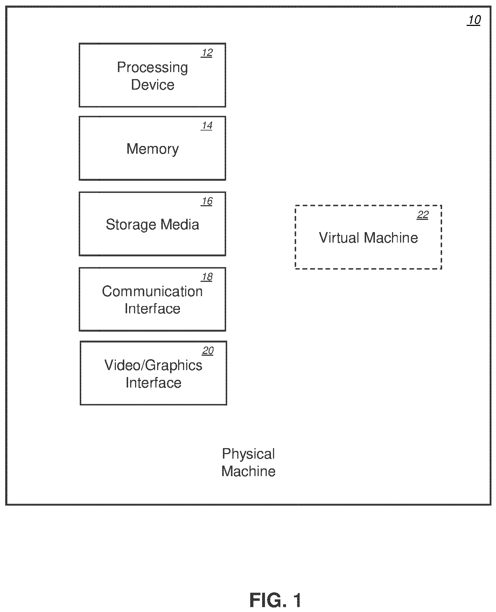

Referring to Fig. 1, a physical machine with a virtual machine provisioned, thereon, is shown. A physical machine represents a "host" machine and may be embodied by any type of suitable physical computer or server. A physical machine is a complete and standalone hardware unit, with its own physical components. A physical machine is a single-tenant computer or server, meaning that a specific physical computer or server is designated to a single user.

The physical machine 10 may comprise a processing device 12, a memory 14, a storage media 16, a communication interface 18, and a video/graphics interface 18, each configured for communication with one another. The physical machine 10 may exist in a "local" environment, e.g., local to an application developer, or may be located on a cloud environment. The physical machine 10 may be used, in part, for performing the methods disclosed herein.

The processing device 12 may include its own memory (e.g., read only memory (ROM) and random-access memory (RAM)) for storing processor-executable instructions and one or more processors that execute processor-executable instructions. The processing device 12 may execute an operating system of the physical machine 10 and/or other software associated with the physical machine 10. The processing device may execute instructions disclosed herein to perform, in part, the methods disclosed herein,

The memory 14 may be any device that stores data generated or received by components of the physical machine (e.g., a random-access memory (RAM) device and/or a read only memory (ROM) device). The memory 14 may support the cache and temporary store of data associated with each of the other components of the physical machine 10.

The storage media 16 may be any form of non-volatile data storage device, such as one or more of a hard disk drive, a magnetic disc, an optical disc, a ROM, etc. The storage media 16 may store an operating system for the processing device 12 to execute in order for the physical machine 10 to function. The storage media 16 may also store one or more computer programs (or software or instructions or code). The storage media 16 may store media to support the execution of methods disclosed herein.

The communication interface 18 may permit communication between the physical machine 10 (and the components, thereof) and interfacing devices, e.g., user input devices, external machines and/or servers, external networks and so on. The communication interface 18 may include one or more wired or wireless transceivers for communicating with external devices (e.g., via Wi-Fi, Bluetooth, Ethernet and so on). The communication interface 18 may be configured to transmit data to, and receive data from, a remote server or processing device (e.g., located on a cloud server). The communication interface 18 may permit interaction between the physical machine 10 and the servers disclosed herein to perform the methods disclosed herein.

The video/graphics interface 20 may generate and permit the display of a graphical user interface, e.g., on a display interfacing with the physical machine 10 via the communication interface 18, representing user interaction with an interface of an operating system. A user may interact with the physical machine 10 using user input devices, via the communication interface 18, to enable the physical machine 10 to initiate methods disclosed herein.

Collectively, the components of the physical machine 10 may support the implementation and execution of a virtual machine 22. The physical machine 10 may host multiple virtual machines 22, each running independently from one another. While each virtual machine 22 has its own CPU, RAM, and storage, these computing resources are finite and collectively supplied by the physical machine 10. The virtual machine 22 may be provisioned on and/or terminated from the physical machine 10 at the point of request, e.g., via a platform, operating system or application, executing on the physical machine 10.

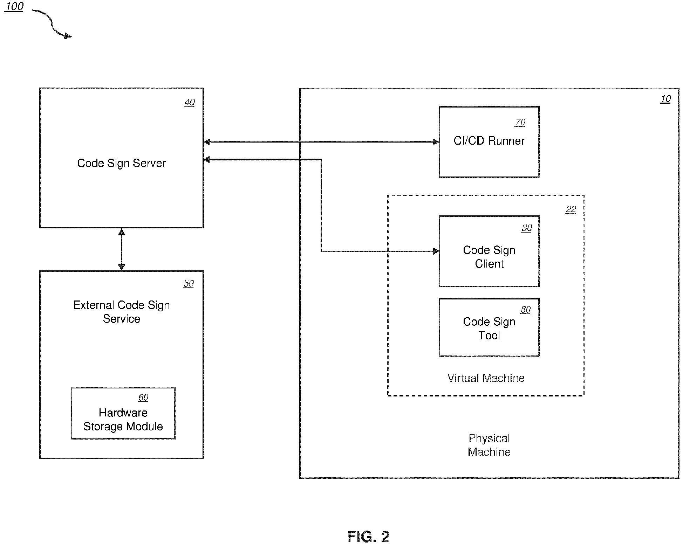

Referring to Fig. 2, a system for securely providing a digital signature for an application within a virtual machine is shown. The system 100 comprises, at the highest level, the physical machine 10, a code sign server 40, and an external code sign service 50. The system 100 is configured to perform the methods disclosed herein. The respective components, both optional and otherwise, of the physical machine 10, the code sign server 40, and the external code sign service 50 are discussed below.

The physical machine 10 may be the same physical machine 10 described with reference to Fig. 1. The virtual machine 22 is hosted on the physical machine 10. A code sign client 30 is initiated, according to the methods disclosed herein, within the virtual machine 22. In addition, a code sign tool 80 may be initiated within the virtual machine 22.

The code sign client 30 is, like any client, a program or application that is configured for sending requests to, and communicating with, a server, as part of its operation. In this context, the code sign client 30 is responsible for enacting a portion of the process of securely providing a digital signature for an application within the virtual machine 22. The code sign client 30 is instantiated within the virtual machine 22 for the purposes of executing code signing, from the perspective of the virtual machine 22, for a given application or a plurality of given applications. As discussed below, the code sign client 30 is configured for communication with components of the system 100 within the virtual machine 22, within the physical machine 10 but outside of the virtual machine 22, and outside of the physical machine 10.

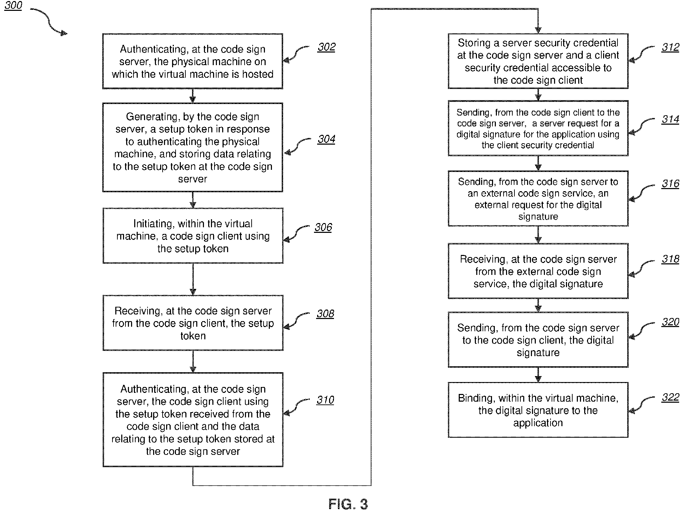

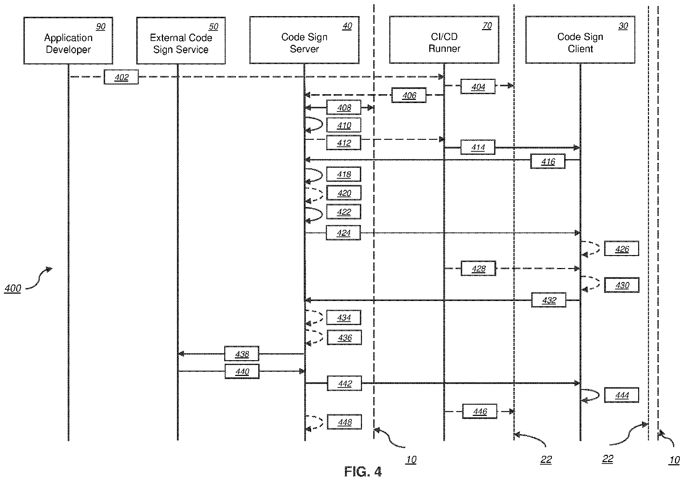

A code sign tool 80 may optionally be initiated or provisioned with the virtual machine 22. As discussed in further detail with reference to the CI/CD runner 70 and with reference to Figs. 3 and 4 below, the code sign tool 80 may provide an intermediary between the code sign client 30 and a program, platform, agent etc., implemented within the physical machine 10 but outside of the virtual machine 22, for example, to facilitate input from a user of the physical machine 10 into the process of securely providing the digital signature for the application within the virtual machine 22. The code sign tool 80 may, therefore, be associated with said program, platform, agent etc. The code sign client 30 may be an application that advertises one or more identities that may be used by the code sign tool 80 and performs signing operations as requested by such tools.

The physical machine 10 may optionally have a continuous integration/continuous deployment, CI/CD, runner 70 executing, thereon. The CI/CD runner 70 represents a program capable of running jobs on the physical machine 10, which include interacting with the virtual machine 22 and components, thereof. As discussed, the method of securely providing the digital signature for the application within the virtual machine may be performed in the context of a DevOps pipeline or environment, e.g., one that is implemented using continuous integration/continuous deployment platform, such as GitLab. The CI/CD runner 70, therefore, runs code defined, e.g., by an application developer interacting with the physical machine 10 via a CI/CD platform.

The code sign server 40 is, like any server, a computer that provides information to other computers and/or programs, i.e., clients. The code sign server may, for example, be a physical machine like the physical machine 10, as discussed with reference to Fig. 1. The code sign server 40 may be located in an environment local to the physical machine 10, albeit independent of it, or may be located in a cloud environment. Alternatively, the code sign server 40 may be located on the same physical machine 10, on which the virtual machine 22 is initiated. Each of the physical machine 10 and the code sign server 40 may be a local or distributed, i.e., cloud-based, compute resource. The physical machine 10 may be isolated from the code sign server 40 to support the security of the system 100. Unlike the code sign client 30, which is instantiated for every instance of a virtual machine 22, the code sign server 40 may exist in a persistent state. The code sign server 40 serves, principally, as a secure intermediary between the physical machine 10 (in particular, the code sign client 20 within the virtual machine 22) and an external code sign service 50 (discussed in further detail below). As discussed with reference to Figs. 3 and 4, the principal contribution of the invention lies in the engagement of the code sign server 40 and the code sign client 30 to enact the process of securely providing the digital signature for the application within the virtual machine 22.

The external code sign service 50 may represent a computer, or server, or environment that is external to both the code sign server 40 and the physical machine 10, e.g., based on the cloud. The external code sign service 50 is configured, ultimately, to transmit to the code sign server 40 the digital signature for signing the application. Generally, code sign services are services that provide signatures for software (in this context, applications). The code signing identity, i.e., the developer of the application, has their certificate maintained securely in the cloud, which is accessible to the external code sign service 50. The code signing identity transmits via the methods herein disclosed and, in particular, via the code sign server 40, its application or a representation of it, e.g., a hash code, to obtain the digital signature. Examples of platforms providing suitable code sign services include DigiCert Software Trust Manager and AWS Signer.

The external code sign service 50 may include a hardware storage module (HSM) 60. The HSM 60 may represent a physical computing device that safeguards and manages secrets (such as digital keys), performs encryption and decryption functions for digital signatures, strong authentication and other cryptographic functions. The HSM 60 may provide a secure environment for managing cryptographic keys and operations, ensuring data security and compliance with regulatory standards.

Referring to Fig. 3, a flow diagram of a method of securely providing a digital signature for an application within a virtual machine. The method 300 will be described with reference to the system 100 shown in Fig. 2, which shows a system for securely providing a digital signature for an application within a virtual machine. Further reference is made to Fig. 4, which shows a protocol sequence diagram of a method of securely providing a digital signature for an application within a virtual machine. The protocol sequence diagram 400 includes various optional steps as part of the method (as indicated by the dashed horizontal arrows).

The first step 302 of the method 300, as indicated by phase 408 (in the protocol sequence diagram shown in Fig. 4), involves authenticating, at the code sign server 40, the physical machine 10 on which the virtual machine 22 is hosted. As discussed, the physical machine 10 may receive user inputs. These user inputs may be provided by an application developer 90 to the physical machine 10 via one or more user input devices and the communication interface 18. A first of these inputs may involve the application developer 90 initiating a build/compilation/code-signing process and/or environment with the CI/CD platform and its runner, as indicated by optional phase 402. These inputs may include a name of a code signing identity, i.e., a developer/author of the application, build environment details and so on. Based on these inputs, the CI/CD runner 70 may then provision the virtual machine 22, as an ephemeral virtual machine or otherwise, as indicated by optional phase 404, to provide an environment for binding the digital signature to the application. One of the inputs may include an indication that the environment including the virtual machine 22 is being provisioned for the purposes of obtaining the digital signature and binding it to the application and, as such, the CI/CD runner 70 may then send the inputs to the code sign server 40, as indicated by optional phase 406. Again, these inputs may include the name of the code signing identity, the build environment details and so on. It may be upon processing these inputs that the code sign server 40 initiates the method 300 which, as mentioned, commences with authenticating the physical machine 10, e.g., via Mutual TLS, as indicated by phase 408. Authenticating, at the code sign server 40, the physical machine 10 may involve evaluating a certificate for the physical machine 10.

The second step 304 of the method 300, as indicated by phase 410, involves generating, by the code sign server 40, a setup token in response to authenticating the physical machine 10, and storing data relating to the setup token at the code sign server 40. Optionally, in order for the code sign server 40 to decide whether to proceed with providing access of its role in providing the digital signature to the code signing identity, the code sign server 40 may evaluate a certificate presented by the CI/CD runner 70 and data relating to the application, i.e., build details, received from the CI/CD runner 70 to determine whether to grant access of the code sign sever 40 to the code sign identity intending to issue, via the virtual machine 22, a request for the digital signature for the application. If it is determined, by the code sign server 40 that it should grant access of its role in providing the digital signature to the code sign identity intending to issue the request for the digital signature for the application, the setup token is generated, as indicated by phase 410. The code sign server 40 may store a copy of the setup token at the code sign server, with an intention of the sending the original setup token or the copy to the code sign client 30, or may store data relating to the setup token, e.g., data relating to the code signing identity, a source IP address of the code signing identity, build details and so on, against the setup token.

The third step 306 of the method 300, as indicated by phase 414, involves initiating, within the virtual machine 22, a code sign client 30 using the setup token. There are a number of ways that the code sign client 30 may be initiated within the virtual machine 22 - all that is essential, however, is that the setup token is used as a basis for doing so. As such, in an optional step, as indicated by optional phase 412, the code sign server 40 may, upon generating the setup token, send the setup token to CI/CD runner 70 for, as required by phase 414, the CI/CD runner to initiate the code sign client 30 within the virtual machine 22, therewith.

The fourth step 308 of the method 300, as indicated by phase 416, involves receiving, at the code sign server 40 from the code sign client 30, the setup token.

The fifth step 310 of the method 300, as indicated by phase 418, involves authenticating, at the code sign server 40, the code sign client 30 using the setup token received from the code sign client 30 and the data relating to the setup token stored at the code sign server 40. This step may involve the code sign server 40 evaluating the setup token, i.e., for comparison with data stored at the code sign server 40 against the setup token, and may involve evaluating a source IP address of the setup token received from the code sign client 30 to determine whether it is coming from the same source as the code signing identity. Optionally, this step may involve the code sign server 40 invalidating the setup token, preventing its reuse, as indicated by optional phase 420.

The sixth step 312 of the method 300, as indicated by phases 422 and 444, involves storing a server security credential at the code sign server 40 and a client security credential accessible to the code sign client 30 in response to the code sign server 40 authenticating the code sign client 30. As discussed, the credentials may be based on asymmetric encryption or tokenisation - all that is essential is that a means for authenticating subsequent requests from the code sign client 30 to the code sign server 40 is provided. Optionally, the code sign client 30 may store the client security credential at a secret store (not pictured in Fig. 2), as indicated by optional phase 426. In the context of an application developed using macOS, the secret store could be provisioned using Apple Keychain.

The seventh step 314 of the method 300, as indicated by phase 432, involves sending, from the code sign client 30 to the code sign server 40, a server request for the digital signature for the application using the client security credential. As discussed, the request for signing the application may be initiated by an instruction to the virtual machine 22 to compile the application for publication and distribution - such an instruction may be provided via the CI/CD runner 70, e.g., using an input from the application developer 90, to the code sign client 30, as indicated by optional phase 428. In some embodiments, this instruction may be transmitted from the CI/CD runner 70 to the code sign client 30 via the code sign tool 80. In some embodiments, the code sign tool 80 may be responsible for reading the application contents, creating a cryptographic checksum based on the application, identifying a suitable code signing identity, requesting the checksum to be signed, and attaching the signature to the application. In the context of an application developed using macOS, the code sign tool 80 may be provisioned using the "codesign" tool in Xcode. In some embodiments, the code sign tool 80 may provide the code sign client 30 with one or more of a message to be signed, a signature algorithm and the name of the code signing identity. Optionally, the code sign client 30 may retrieve the client security credential from the secret store, as indicated by optional phase 430, in order to send it with the server request during phase 432. The server request may optionally include one or more of the message to be signed, the signature algorithm and the name of the code signing identity.

The eighth step 316 of the method 300, as indicated by phase 438, involves sending, from the code sign server 40 to the external code sign service 50, an external request for the digital signature. Optionally, the code sign server 40 may evaluate the client security credential against information previously stored at the code sign server 40, e.g., source IP address and application details, to determine whether the server request for the digital signature is permitted, as indicated by optional phase 434. In addition, the code sign server 40 may decide at this stage to invalidate one or both of the sever security credential and the client security credential in order to prevent their reuse, as indicated by optional phase 436. In some embodiments, the pair of security credentials may be configured for use in a predetermined number of operations, with each server request decrementing the remaining permitted number of operations by 1 - in such a case, one or both of the credentials may be invalidated when the remaining permitted number of operations reaches 0. This eight step 316 may involve the code sign server 40 sending, as part of the external request for the digital signature to the external code sign service 50, one or more of a private key identifier, the message to be signed and the signing algorithm.

The ninth step 318 of the method 300, as indicated by phase 440, involves receiving, at the code sign server 40 from the external code sign service 50, the digital signature in response to the external request. Optionally, the external code sign service 50 may interact with its hardware storage module 60 to obtain the digital signature. The process of the external code sign service 50 obtaining the digital signature based on the external request may be performed according to standard implementations in the art.

The tenth step 320 of the method 300, as indicated by phase 442, involves sending, from the code sign server 40 to the code sign client 30, the digital signature. This step may involve the code sign server 40 recording the signing before sending the signature to the code sign client 30.

The eleventh step 322 of the method 300, as indicated by phase 444, involves binding, i.e., applying, within the virtual machine 22, the digital signature to the application. Optionally, this step may involve the code sign client 30 sending the signature to the code sign tool 80 for it to perform the binding. The process of binding the signature to the applications may be performed according to standard implementations in the art. At this point, the application has been successfully code signed. In an optional step, as indicated by optional phase 446, the CI/CD runner 70 may recognise that the signing has been completed and may, therefore, choose to destroy the virtual machine 22. In a further optional step, the code sign server 40 may perform a check on whether any of the setup token or the credential pair have yet to be invalidated and, if so, invalidating them, as indicated by optional phase 448.

The method 300 thus provides a way of securely providing a digital signature for an application within a virtual machine.

### General

The invention may be at least partially embodied as one or more computer programs, or as one or more computer-readable mediums having computer executable code, for use by or in connection with system of Fig. 2. For the purposes of this description, a computer readable medium can be any tangible apparatus that can contain, store, communicate, propagate, or transport the program for use by or in connection with the system of Fig. 2. Moreover, a computer-readable medium can be an electronic, magnetic, optical, electromagnetic, infrared, or semiconductor system (or apparatus or device) or a propagation medium. Examples of a computer-readable medium include a semiconductor or solid-state memory, magnetic tape, a removable computer diskette, a random access memory (RAM), a read-only memory (ROM), a rigid magnetic disk and an optical disk. Current examples of optical disks include compact disk-read only memory (CD-ROM), compact disk-read/write (CD-R/W) and DVD.

The methods described herein may be performed by software in machine readable form on a tangible storage medium e.g. in the form of a computer program comprising computer program code means adapted to perform at least some of the steps of the methods described herein when the program is run within the system of Fig. 2 and where the computer program may be embodied on a computer readable medium. Examples of tangible (or non-transitory) storage media include disks, thumb drives, memory cards etc., and do not include propagated signals. The software can be suitable for execution on a parallel processor or a serial processor such that the method steps may be carried out in any suitable order, or simultaneously. This acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

Those skilled in the art will realise that storage media utilised to store program instructions can be distributed across the system of Fig. 2.Those skilled in the art will also realise that by utilising conventional techniques known to those skilled in the art that all, or a portion of the software instructions may be carried out by a dedicated circuit, such as a DSP, programmable logic array, or the like.

The flow diagrams in the figures illustrate the architecture, functionality, and operation of possible implementations of the methods of the invention. In some alternative implementations, the steps noted in the figures may occur out of the order noted in the figures. For example, two steps shown in succession may, in fact, be performed substantially concurrently, or the blocks may sometimes be performed in the reverse order, depending upon the functionality involved.

Unless otherwise indicated each embodiment as described herein may be combined with another embodiment as described herein.

It will be understood that the benefits and advantages described above may relate to one embodiment or may relate to several embodiments. The embodiments are not limited to those that solve any or all of the stated problems or those that have any or all of the stated benefits and advantages.

Any reference to 'an' item refers to one or more of those items. The term 'comprising' is used herein to mean including the method blocks or elements identified, but that such blocks or elements do not comprise an exclusive list and a method or apparatus may contain additional blocks or elements.

It will be understood that the above description of a preferred embodiment is given by way of example only and that various modifications may be made by those skilled in the art. Although various embodiments have been described above with a certain degree of particularity, or with reference to one or more individual embodiments, those skilled in the art could make numerous alterations to the disclosed embodiments without necessarily departing from the scope of this invention.

### Embodiments

The following list provides embodiments of the invention and forms part of the description. These embodiments can be combined in any compatible combination beyond those expressly stated. The embodiments can also be combined with any compatible features described, herein.
1. A method of securely providing a digital signature for an application within a virtual machine, the method comprising
   authenticating, at a code sign server, a physical machine on which the virtual machine is hosted;
   generating, by the code sign server, a setup token in response to authenticating the physical machine, and storing data relating to the setup token at the code sign server;
   initiating, within the virtual machine, a code sign client using the setup token;
   receiving, at the code sign server from the code sign client, the setup token;
   authenticating, at the code sign server, the code sign client using the setup token received from the code sign client and the data relating to the setup token stored at the code sign server;
   storing a server security credential at the code sign server and a client security credential accessible to the code sign client in response to authenticating the code sign client;
   sending, from the code sign client to the code sign server, a server request for a digital signature for the application within the virtual machine using the client security credential;
   sending, from the code sign server to an external code sign service, an external request for the digital signature in response to authenticating the server request using the server security credential;
   receiving, at the code sign server from the external code sign service, the digital signature in response to the external request;
   sending, from the code sign server to the code sign client, the digital signature; and
   binding, within the virtual machine, the digital signature to the application.
2. The method of embodiment 1, wherein the client security credential is a signing token, and wherein the server security credential is a hashed version of the signing token.
3. The method of embodiment 2, further comprising:
   generating, by the code sign server, the signing token in response to authenticating the code sign client; and
   hashing, by the code sign server, the signing token.
4. The method of embodiment 3, further comprising,
   sending, by the code sign server, the signing token to the code sign client; and
   storing, by the code sign client, the signing token in an encrypted repository.
5. The method of any of embodiments 2 to 4, wherein sending, from the code sign client to the code sign server, a server request for a digital signature for the application within the virtual machine using the client security credential comprises sending the signing token.
6. The method of embodiment 5, wherein sending, by the code sign server to an external code sign service, an external request for the digital signature in response to authenticating the server request using the server security credential comprises comparing the hashed signing token to the signing token received from the code sign client.
7. The method of embodiment 1, wherein the client security credential is a private key of an asymmetric key pair and the server security credential is a public key of the asymmetric key pair.
8. The method of embodiment 7, further comprising:
   generating, by the code sign client, the asymmetric key pair in response to authenticating the code sign client;
   storing, by the code sign client, the private key in an encrypted repository; and
   sending, from the code sign client to the code sign server, the public key.
9. The method of any of embodiments 7 to 8, wherein sending, from the code sign client to the code sign server, a server request for a digital signature for the application within the virtual machine using the client security credential comprises digitally signing the server request using the private key.
10. The method of embodiment 9, wherein sending, by the code sign server to an external code sign service, an external request for the digital signature in response to authenticating the server request using the server security credential comprises retrieving the public key and validating the digitally signed server request using the public key.
11. The method of any preceding embodiment, further comprising:
   compiling, within the virtual machine, the application.
12. The method of embodiment 11, wherein the compiling is performed prior to authenticating the physical machine on which the virtual machine is hosted.
13. The method of embodiment 11, wherein the compiling is performed after storing the server security credential at the code sign server and the client security credential accessible to the code sign client and prior to sending the server request for the digital signature.
14. The method of any preceding embodiment, wherein the server request comprises a compiled version of the application and a signing algorithm.
15. The method of embodiment 14, wherein the external request comprises the compiled version of the application and the signing algorithm.
16. The method of any preceding embodiment, wherein the physical machine is executing a continuous integration/continuous deployment, CI/CD, runner, and wherein the CI/CD runner provisions the virtual machine on the physical machine.
17. The method of embodiment 16, wherein the method further comprises evaluating, at the code sign server, a certificate presented by the CI/CD runner to determine whether to grant access of the code sign sever to a code sign identity intending to issue a request for the digital signature for the application.
18. The method of embodiment 16 or embodiment 17, wherein the method further comprises evaluating, at the code sign server, data relating to the application to determine whether to grant access of the code sign sever to the code sign identity intending to issue a request for the digital signature for the application.
19. The method of embodiment 17 or embodiment 18, wherein generating, by the code sign server, the setup token in response to authenticating the physical machine comprises generating the setup token if it is determined that that the code sign server should grant access of the code sign sever to the code sign identity intending to issue the request for the digital signature for the application.
20. The method of embodiments 16 to 19, wherein initiating, within the virtual machine, the code sign client using the setup token comprises:
   provisioning, via the CI/CD runner, the virtual machine on the physical machine; and
   transmitting, from the code sign server to the code sign client via the CI/CD runner, the setup token.
21. The method of any preceding embodiment, wherein the data relating to the setup token comprises data, stored against the setup token, relating to the application and a source IP address of a code sign identity intending to issue a request for the digital signature for the application.
22. The method of any preceding embodiment, wherein authenticating, at the code sign server, the code sign client using the setup token received from the code sign client and the data relating to the setup token stored at the code sign server comprises evaluating the setup token received from the code sign client and a source IP address of the setup token received from the code sign client to identify a code sign identity to provide, via the code sign client, access of the security credential to.
23. The method of any preceding embodiment, further comprising invalidating, via the code sign server, the setup token.
24. The method of embodiment 16, wherein sending, from the code sign client to the code sign server, a server request for a digital signature for the application within the virtual machine using the client security credential comprises invoking, using the CI/CD runner, a code sign tool within the virtual machine, and the code sign tool invoking the code sign client to send the server request.
25. The method of any preceding embodiment, wherein the client security credential is stored at a secret store within the virtual machine.
26. The method of embodiment 25, wherein sending, from the code sign client to the code sign server, a server request for a digital signature for the application within the virtual machine using the client security credential comprises the code sign client retrieving the client security credential from the secret store.
27. The method of any preceding embodiment, wherein sending, from the code sign server to an external code sign service, an external request for the digital signature in response to authenticating the server request using the server security credential comprises evaluating, at the code sign server, the client security credential against data relating to the application stored against the setup token to determine whether the external request for the digital signature is permitted, and sending the external request if it is determined that the external request is permitted.
28. The method of any preceding embodiment, further comprising invalidating, via the code sign server, the client security credential.
29. The method of any preceding embodiment, further comprising destroying, via the CI/CD runner, the virtual machine.
30. The method of any embodiment, wherein the virtual machine is an ephemeral virtual machine.
31. A system configured to perform the method of any preceding embodiment, the system comprising:
   a physical machine comprising a virtual machine provisioned, thereon, the virtual machine comprising a code sign client; and
   a code sign server.
32. The system of embodiment 31, further comprising:
   a continuous integration/continuous deployment, CI/CD, runner.

## Claims

1. A method of securely providing a digital signature for an application within a virtual machine, the method comprising
authenticating, at a code sign server, a physical machine on which the virtual machine is hosted;
generating, by the code sign server, a setup token in response to authenticating the physical machine, and storing data relating to the setup token at the code sign server;
initiating, within the virtual machine, a code sign client using the setup token;
receiving, at the code sign server from the code sign client, the setup token;
authenticating, at the code sign server, the code sign client using the setup token received from the code sign client and the data relating to the setup token stored at the code sign server;
storing a server security credential at the code sign server and a client security credential accessible to the code sign client in response to authenticating the code sign client;
sending, from the code sign client to the code sign server, a server request for a digital signature for the application within the virtual machine using the client security credential;
sending, from the code sign server to an external code sign service, an external request for the digital signature in response to authenticating the server request using the server security credential;
receiving, at the code sign server from the external code sign service, the digital signature in response to the external request;
sending, from the code sign server to the code sign client, the digital signature; and
binding, within the virtual machine, the digital signature to the application.

2. The method of claim 1, wherein the client security credential is a signing token, and wherein the server security credential is a hashed version of the signing token.

3. The method of claim 2, further comprising:
generating, by the code sign server, the signing token in response to authenticating the code sign client; and
hashing, by the code sign server, the signing token.

4. The method of claim 3, further comprising,
sending, by the code sign server, the signing token to the code sign client; and
storing, by the code sign client, the signing token in an encrypted repository.

5. The method of any of claims 2 to 4, wherein sending, from the code sign client to the code sign server, a server request for a digital signature for the application within the virtual machine using the client security credential comprises sending the signing token.

6. The method of claim 5, wherein sending, by the code sign server to an external code sign service, an external request for the digital signature in response to authenticating the server request using the server security credential comprises comparing the hashed signing token to the signing token received from the code sign client.

7. The method of claim 1, wherein the client security credential is a private key of an asymmetric key pair and the server security credential is a public key of the asymmetric key pair.

8. The method of claim 7, further comprising:
generating, by the code sign client, the asymmetric key pair in response to authenticating the code sign client;
storing, by the code sign client, the private key in an encrypted repository; and
sending, from the code sign client to the code sign server, the public key.

9. The method of any of claims 7 to 8, wherein sending, from the code sign client to the code sign server, a server request for a digital signature for the application within the virtual machine using the client security credential comprises digitally signing the server request using the private key.

10. The method of claim 9, wherein sending, by the code sign server to an external code sign service, an external request for the digital signature in response to authenticating the server request using the server security credential comprises retrieving the public key and validating the digitally signed server request using the public key.

11. The method of any preceding claim, wherein the data relating to the setup token comprises data, stored against the setup token, relating to the application and a source IP address of a code sign identity intending to issue a request for the digital signature for the application.

12. The method of any preceding claim, wherein authenticating, at the code sign server, the code sign client using the setup token received from the code sign client and the data relating to the setup token stored at the code sign server comprises evaluating the setup token received from the code sign client and a source IP address of the setup token received from the code sign client to identify a code sign identity to provide, via the code sign client, access of the security credential to.

13. The method of any preceding claim, wherein sending, from the code sign server to an external code sign service, an external request for the digital signature in response to authenticating the server request using the server security credential comprises evaluating, at the code sign server, the client security credential against data relating to the application stored against the setup token to determine whether the external request for the digital signature is permitted, and sending the external request if it is determined that the external request is permitted.

14. The method of any preceding, wherein the virtual machine is an ephemeral virtual machine.

15. A system configured to perform the method of any preceding claim, the system comprising:
a physical machine comprising a virtual machine provisioned, thereon, the virtual machine comprising a code sign client; and
a code sign server.

## Amended claims

### Amended claims in accordance with Rule 137(2) EPC.

1. A method of securely providing a digital signature for an application within a virtual machine (22), the method comprising
authenticating, at a code sign server (40), a physical machine (10) on which the virtual machine (22) is hosted;
generating, by the code sign server (40), a setup token in response to authenticating the physical machine (10), and storing data relating to the setup token at the code sign server (40);
initiating, within the virtual machine (22), a code sign client (30) using the setup token;
receiving, at the code sign server (40) from the code sign client (30), the setup token; authenticating, at the code sign server (40), the code sign client (30) using the setup token received from the code sign client (30) and the data relating to the setup token stored at the code sign server (40);
storing a server security credential at the code sign server (40) and a client security credential accessible to the code sign client (30) in response to authenticating the code sign client (30);
sending, from the code sign client (30) to the code sign server (40), a server request for a digital signature for the application within the virtual machine (22) using the client security credential;
sending, from the code sign server (40) to an external code sign service (50), an external request for the digital signature in response to authenticating the server request using the server security credential;
receiving, at the code sign server (40) from the external code sign service (50), the digital signature in response to the external request;
sending, from the code sign server (40) to the code sign client (30), the digital signature; and
binding, within the virtual machine (22), the digital signature to the application.

2. The method of claim 1, wherein the client security credential is a signing token, and wherein the server security credential is a hashed version of the signing token.

3. The method of claim 2, further comprising:
generating, by the code sign server (40), the signing token in response to authenticating the code sign client (30); and
hashing, by the code sign server (40), the signing token.

4. The method of claim 3, further comprising,
sending, by the code sign server (40), the signing token to the code sign client (30); and
storing, by the code sign client (30), the signing token in an encrypted repository.

5. The method of any of claims 2 to 4, wherein sending, from the code sign client (30) to the code sign server (40), a server request for a digital signature for the application within the virtual machine (22) using the client security credential comprises sending the signing token.

6. The method of claim 5, wherein sending, by the code sign server (40) to an external code sign service (50), an external request for the digital signature in response to authenticating the server request using the server security credential comprises comparing the hashed signing token to the signing token received from the code sign client (30).

7. The method of claim 1, wherein the client security credential is a private key of an asymmetric key pair and the server security credential is a public key of the asymmetric key pair.

8. The method of claim 7, further comprising:
generating, by the code sign client (30), the asymmetric key pair in response to authenticating the code sign client (30);
storing, by the code sign client (30), the private key in an encrypted repository; and
sending, from the code sign client (30) to the code sign server (40), the public key.

9. The method of any of claims 7 to 8, wherein sending, from the code sign client (30) to the code sign server (40), a server request for a digital signature for the application within the virtual machine (22) using the client security credential comprises digitally signing the server request using the private key.

10. The method of claim 9, wherein sending, by the code sign server (40) to an external code sign service (50), an external request for the digital signature in response to authenticating the server request using the server security credential comprises retrieving the public key and validating the digitally signed server request using the public key.

11. The method of any preceding claim, wherein the data relating to the setup token comprises data, stored against the setup token, relating to the application and a source IP address of a code sign identity intending to issue a request for the digital signature for the application.

12. The method of any preceding claim, wherein authenticating, at the code sign server (40), the code sign client (30) using the setup token received from the code sign client (30) and the data relating to the setup token stored at the code sign server (40) comprises evaluating the setup token received from the code sign client (30) and a source IP address of the setup token received from the code sign client (30) to identify a code sign identity to provide, via the code sign client (30), access of the security credential to.

13. The method of any preceding claim, wherein sending, from the code sign server (40) to an external code sign service (50), an external request for the digital signature in response to authenticating the server request using the server security credential comprises evaluating, at the code sign server (40), the client security credential against data relating to the application stored against the setup token to determine whether the external request for the digital signature is permitted, and sending the external request if it is determined that the external request is permitted.

14. The method of any preceding claim, wherein the virtual machine (22) is an ephemeral virtual machine.

15. A system (100) configured to perform the method of any preceding claim, the system comprising:
a physical machine (10) comprising a virtual machine (22) provisioned, thereon, the virtual machine (22) comprising a code sign client (30); and
a code sign server (40).
